# EUROPEAN PATENT APPLICATION

(11) **EP 4 685 995 A1**
(43) Date of publication of application: **28.01.2026**
(21) Application number: 24884426.8
(22) Date of filing: 15.10.2024
(51) Int. Cl.: H01M 50/636, H01M 50/645, H01M 10/04

(54) **BATTERY CELL, BATTERY, AND ELECTRICAL DEVICE**

(30) Priority: 03.11.2023 CN 202322980687 U
(71) Applicant: Contemporary Amperex Technology Co., Limited, Ningde, Fujian 352100 (CN)
(72) Inventor: WU, Yu, Ningde, Fujian 352100 (CN); HUANG, Shoujun, Ningde, Fujian 352100 (CN); CHEN, Xinxiang, Ningde, Fujian 352100 (CN); CHEN, Long, Ningde, Fujian 352100 (CN); ZHENG, Yulian, Ningde, Fujian 352100 (CN); WANG, Peng, Ningde, Fujian 352100 (CN)
(74) Representative: Ran, Handong
(86) International application number: PCT/CN2024/125067
(87) International publication number: WO 2025/092422

(57) **Abstract**

A battery cell (20), a battery (100), and an electrical device. The battery cell (20) comprises a casing (21) and a first sealing member (23). The casing (21) comprises a first wall (213), and the first wall (213) is provided with a liquid injection hole (2130); and the first sealing member (23) is configured to seal the liquid injection hole (2130), the first sealing member (23) and the first wall (213) are welded and form a connecting portion (230), the connecting portion (230) is provided around the liquid injection hole (2130), and the connecting portion (230) is exposed to the surface of the first sealing member (23) facing away from the first wall (213). The solution can improve the reliability of the battery (100).

## Description

### CROSS-REFERENCE TO RELATED APPLICATIONS

This application claims priority to Chinese Patent Application No. CN202322980687.7, filed on November 03, 2023, entitled "BATTERY CELL, BATTERY, AND ELECTRIC DEVICE", the entire contents of which are incorporated herein by reference.

### TECHNICAL FIELD

This application relates to the field of battery technology, and more particularly, to a battery cell, a battery, and an electric device.

### BACKGROUND

Energy conservation and emission reduction are the key to the sustainable development of the automobile industry, and electric vehicles have become an important part of the sustainable development of the automobile industry due to their advantages in energy conservation and environmental protection. For electric vehicles, battery technology is an important factor related to their development.

In the manufacturing process of batteries, the reliability of batteries is an issue that cannot be ignored. Therefore, how to improve the reliability of batteries is a technical problem that needs to be urgently solved in battery technology.

### SUMMARY

This application provides a battery cell, a battery, and an electric device, which can improve the reliability of batteries.

This application is implemented through the following technical solutions:
In a first aspect, an embodiment of this application provides a battery cell, where the battery cell includes a housing and a first sealing member. The housing includes a first wall, where the first wall is provided with a liquid injection hole; the first sealing member is configured to seal the liquid injection hole, the first sealing member is welded to the first wall and forms a connection portion, the connection portion is disposed around the liquid injection hole, and the connection portion is exposed on a surface of the first sealing member facing away from the first wall.

According to the battery cell of the embodiment of this application, the first sealing member is welded to the first wall to form the connection portion, the connection portion may be a weld mark, and the connection portion is exposed on the surface of the first sealing member facing away from the first wall, so that the first sealing member and the first wall can be connected and fixed by means of penetration welding. This can make the first sealing member and the first wall have a larger sealing area (for example, providing a wider connection portion, or providing multiple connection portions around the liquid injection hole), so as to improve the airtightness after the first sealing member is connected to the first wall, and improve the reliability of the battery cell.

According to some embodiments of this application, the connection portion includes a first part and a second part sequentially distributed along a thickness direction of the first wall, where the first part is located at the first sealing member, and the second part is located at the first wall.

In the above solution, the first part is located at the first sealing member, and the second part is located at the first wall, so that the first sealing member is firmly connected to the first wall.

According to some embodiments of this application, along the thickness direction of the first wall, there is a gap between an orthographic projection of the connection portion and an edge of the first sealing member.

In the above solution, there is a gap between the orthographic projection of the connection portion and the edge of the first sealing member, and the first sealing member may be connected to the first wall by means of penetration welding to form the connection portion, so that the first sealing member is firmly connected to the first wall, and the reliability of the battery cell is improved.

According to some embodiments of this application, a thickness of the first wall is H1, and a wall thickness of the first sealing member is H2, satisfying H2 < H1.

In the above solution, the thickness H1 of the first wall is greater than or equal to the wall thickness H2 of the first sealing member, so that when the first sealing member is welded to the first wall, the first wall near the liquid injection hole is not easily penetrated, and the reliability of the battery cell is improved.

According to some embodiments of this application, the connection portion includes a first connection portion and a second connection portion, where the first connection portion is disposed around the liquid injection hole, and the second connection portion is disposed around the first connection portion.

In the above solution, the first connection portion is disposed around the liquid injection hole, and the second connection portion is disposed around the first connection portion, which can enhance the connection stability between the first sealing member and the first wall, and improve the airtightness after the first sealing member is connected to the first wall.

According to some embodiments of this application, the first sealing member has a fitting surface for fitting to the first wall, a width of the fitting surface in a first direction is L, the first direction intersects with the thickness direction of the first wall, and the thickness of the first wall is H1, satisfying 3*H1 ≤ L ≤ 6*H1.

In the above solution, the width of the fitting surface in the first direction satisfies the above relationship, allowing the first sealing member and the first wall to have a larger connection area, such that multiple connection portions can be provided around the liquid injection hole, and thus the first sealing member is firmly connected to the first wall, and allowing the first sealing member to occupy a relatively small size in the first direction, thus reducing materials.

According to some embodiments of this application, the first wall includes a first surface facing away from an interior of the battery cell and a second surface facing the interior of the battery cell, the first surface is provided with a groove, the second surface forms a protrusion at a position corresponding to the groove, the liquid injection hole is provided in a groove bottom wall of the groove, and the first sealing member covers the groove.

In the above solution, the first surface and the second surface may be two opposite surfaces in the thickness direction of the first wall, the first surface is formed with the groove, the second surface forms the protrusion at the position corresponding to the groove, the first wall may be relatively thin, the groove may be formed by stamping, and the processing and manufacturing difficulty is relatively low. The liquid injection hole is provided in the groove bottom wall of the groove, and the first sealing member covers the groove, so as to reduce the space occupation after the first sealing member and the first wall are assembled.

According to some embodiments of this application, the battery cell further includes a second sealing member, at least part of the second sealing member is provided in the liquid injection hole to seal the liquid injection hole.

In the above solution, at least part of the second sealing member is provided in the liquid injection hole, so as to facilitate the sealing of the liquid injection hole and reduce the risk of electrolyte leakage.

According to some embodiments of this application, the first wall includes a flanging portion, the flanging portion is provided on a side of the protrusion facing the interior of the battery cell, the protrusion has a third surface facing away from the second surface, the liquid injection hole penetrates through the flanging portion, and part of an outer periphery of the second sealing member fits to an inner surface of the flanging portion.

In the above solution, the liquid injection hole penetrates through the flanging portion, and the liquid injection hole may be formed by stamping the first wall. The flanging portion is provided on the side of the protrusion facing the interior of the battery cell, allowing for reasonable use of the internal space of the battery cell. The flanging portion may be in an annular structure, and the part of the outer periphery of the second sealing member fits to the inner surface of the flanging portion, so that the second sealing member has a larger sealing area with the first wall while sealing the liquid injection hole. This can improve the connection sealing between the second sealing member and the first wall, and reduce the risk of electrolyte leakage.

According to some embodiments of this application, along the thickness direction of the first wall, a size of the flanging portion protruding from the third surface is H3, and a wall thickness of the first wall is H1, satisfying H1 ≤ H3 ≤ 3*H1.

In the above solution, the size of the flanging portion protruding from the third surface satisfies the above relationship, allowing for a larger connection area between the second sealing member and the flanging portion, and relatively low processing and manufacturing difficulty.

According to some embodiments of this application, along the thickness direction of the first wall, a size of the second sealing member protruding from the third surface is H4, satisfying H3 ≤ H4.

In the above solution, the size of the second sealing member protruding from the third surface satisfies the above relationship, allowing the second sealing member and the flanging portion to have a larger connection area, and allowing the second sealing member to occupy a relatively small assembly space, thus reducing the risk of interference between the second sealing member and other components.

According to some embodiments of this application, the second sealing member includes a body and a flange, the body seals the liquid injection hole, and the flange is formed on an outer peripheral surface of the body and connected to the groove bottom wall of the groove.

In the above solution, the flange is formed on the outer peripheral surface of the body, and the flange can limit the body from moving toward the interior of the battery cell. Additionally, the flange is connected to the groove bottom wall of the groove, which can improve the sealing effect between the second sealing member and the first wall, and reduce the risk of electrolyte leakage.

According to some embodiments of this application, the first sealing member is provided with a recessed portion, the recessed portion is recessed toward the groove, and along the thickness direction of the first wall, an orthographic projection of the recessed portion falls within an orthographic projection of a groove side wall of the groove.

In the above solution, the provision of the recessed portion can improve the strength of the first sealing member, and at the same time, the recessed portion is recessed toward the interior of the battery cell and located in the groove, which can reduce space occupation and reduce the risk of interference between the first sealing member and other components.

According to some embodiments of this application, along the thickness direction of the first wall, the orthographic projection of the recessed portion is disposed around the second sealing member.

In the above solution, the orthographic projection of the recessed portion is disposed around the second sealing member, which can reduce the risk of interference between the recessed portion and the second sealing member.

According to some embodiments of this application, along the first direction, a minimum distance between the orthographic projection of the recessed portion along the thickness direction of the first wall and an orthographic projection of the flange along the thickness direction of the first wall is D1, satisfying 0.05 mm ≤ D1 ≤ 0.2 mm, and the first direction intersects with the thickness direction of the first wall.

In the above solution, the minimum distance in the first direction between the orthographic projection of the recessed portion along the thickness direction of the first wall and the orthographic projection of the flange along the thickness direction of the first wall satisfies the above relationship, reducing the risk of interference between the recessed portion and the flange, and reducing the space occupation of the recessed portion in the first direction.

According to some embodiments of this application, along the thickness direction of the first wall, the second sealing member and the first sealing member are spaced apart.

In the above solution, the second sealing member and the first sealing member are spaced apart, so that the second sealing member does not interfere with the first sealing member, facilitating the assembly of the first sealing member and the first wall.

According to some embodiments of this application, the second sealing member is a rubber member.

In the above solution, the rubber member can undergo elastic deformation, and the second sealing member can be in interference fit with the liquid injection hole, so as to increase the sealing effect between the second sealing member and a hole wall of the liquid injection hole.

According to some embodiments of this application, the thickness of the first wall is H1, satisfying H1 ≤ 0.6 mm.

In the above solution, since the first wall is relatively thin, so as to facilitate the connection of the first sealing member and the first wall by means of penetration welding, the first sealing member and the first wall may have a larger connection area, improving the airtightness after the first sealing member is connected to the first wall. The first wall is relatively thin, so that the weight of the battery cell can be relatively light to meet the usage requirement of light weight.

In a second aspect, an embodiment of this application further provides a battery, where the battery includes the battery cell provided in any one of the above embodiments.

In a third aspect, an embodiment of this application further provides an electric device, where the electric device includes the battery cell or the battery provided in any one of the above embodiments, and the battery cell or the battery is configured to provide electric energy.

The additional aspects and advantages of this application will be partly given in the following description, and partly will become obvious from the following description, or be understood through the practice of this application.

### BRIEF DESCRIPTION OF DRAWINGS

In order to more clearly illustrate the technical solutions of the embodiments of this application, the drawings required to be used in the embodiments will be briefly introduced below. It should be understood that the following drawings only show some embodiments of this application, and therefore should not be regarded as limiting the scope. For those of ordinary skill in the art, other related drawings can also be obtained according to these drawings without creative efforts.
FIG. 1 is a schematic structural diagram of a vehicle provided in some embodiments of this application;
FIG. 2 is an exploded view of a battery provided in some embodiments of this application;
FIG. 3 is an exploded view of a battery cell provided in some embodiments of this application;
FIG. 4 is a schematic assembly diagram of a first sealing member and a first wall provided in some embodiments of this application; and
FIG. 5 is a cross-sectional view of the first sealing member and the first wall in an assembled state provided in some embodiments of this application.

In the drawings, the drawings are not drawn according to the actual scale.

Description of reference signs: 100. battery; 10. box; 11. first sub-box; 12. second sub-box; 20. battery cell; 21. housing; 211. shell; 212. end cover; 213. first wall; 213a. first surface; 213b. second surface; 213c. third surface; 2130. liquid injection hole; 2131. groove; 2131a. groove bottom wall; 2131b. groove side wall; 2132. protrusion; 2133. flanging portion; 22. electrode assembly; 23. first sealing member; 23a. fourth surface; 23b. fifth surface; 230. connection portion; 230a. first connection portion; 230b. second connection portion; 2301. first part; 2302. second part; 231. fitting surface; 232. recessed portion; 233. second protrusion; 234. second recessed portion; 24. second sealing member; 241. body; 242. flange; 25. electrode terminal; 26. adapter; 200. controller; 300. motor; 1000. vehicle; X. first direction; and Z. thickness direction of first wall.

### DESCRIPTION OF EMBODIMENTS

In order to make the purposes, technical solutions and advantages of the embodiments of this application clearer, the technical solutions in the embodiments of this application will be clearly and completely described below with reference to the drawings in the embodiments of this application. Obviously, the described embodiments are part of the embodiments of this application, rather than all the embodiments. Based on the embodiments in this application, all other embodiments obtained by those of ordinary skill in the art without creative efforts fall within the protection scope of this application.

Unless otherwise defined, all technical and scientific terms used in this application have the same meaning as commonly understood by those skilled in the technical field to which this application belongs. The terms used in the specification of this application are only for the purpose of describing specific embodiments, and are not intended to limit this application. The terms "include" and "have" in the specification and claims of this application and the above description of the drawings, as well as any variations thereof, are intended to cover non-exclusive inclusions. The terms "first", "second", and the like in the specification and claims of this application or the above drawings are used to distinguish different objects, rather than to describe a specific order or primary-secondary relationship.

Reference to "embodiment" in this application means that a particular feature, structure or characteristic described in conjunction with the embodiment may be included in at least one embodiment of this application. The appearance of the phrase in various places in the specification does not necessarily refer to the same embodiment, nor is it an independent or alternative embodiment that is mutually exclusive with other embodiments. It is explicitly and implicitly understood by those skilled in the art that the embodiments described in this application can be combined with other embodiments.

In the description of this application, it should be noted that, unless otherwise clearly specified and limited, the terms "mount", "join", "connect", and "attach" should be understood in a broad sense. For example, it may be a fixed connection, or a detachable connection, or an integral connection; or it may be a direct connection, or an indirect connection through an intermediate medium, or a communication between the interiors of two elements. For those of ordinary skill in the art, the specific meanings of the above terms in this application can be understood according to specific situations.

The term "and/or" in this application is only an association relationship describing associated objects, which means that there may be three relationships, for example, A and/or B may mean: A exists alone, A and B exist at the same time, and B exists alone. In addition, the character "/" in this application generally means that the associated objects before and after are in an "or" relationship.

The term "multiple" appearing in this application means two or more (including two), similarly, "multiple groups" means two or more groups (including two groups), and "multiple pieces" means two or more pieces (including two pieces).

In some embodiments, the battery may be a battery module, and when there are multiple battery cells, the multiple battery cells are arranged and fixed to form a battery module.

In some embodiments, the battery may be a battery pack, where the battery pack includes a box and battery cells, and the battery cells or battery modules are accommodated in the box.

In some embodiments, the box may be a part of a chassis structure of a vehicle. For example, part of the box may become at least part of a floor of the vehicle, or part of the box may become at least part of a cross beam and a longitudinal beam of the vehicle.

In some embodiments, the battery may be an energy storage apparatus. The energy storage apparatus includes an energy storage container, an energy storage cabinet, or the like.

In the embodiments of this application, the battery cell may be a secondary battery, where the secondary battery refers to a battery cell that can continue to be used by activating active materials through charging after the battery cell is discharged.

The battery cell may be, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead-acid battery.

The battery cell generally includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is provided between the positive electrode and the negative electrode, which can prevent short circuit between the positive and negative electrodes, and at the same time can allow active ions to pass through.

In some embodiments, the positive electrode may be a positive electrode sheet, and the positive electrode sheet may include a positive electrode current collector and a positive electrode active material provided on at least one surface of the positive electrode current collector.

As an example, the positive electrode current collector has two opposite surfaces in its own thickness direction, and the positive electrode active material is provided on either or both of the two opposite surfaces of the positive electrode current collector.

As an example, the positive electrode current collector may adopt a metal foil or a composite current collector. For example, as the metal foil, silver-plated aluminum, silver-plated stainless steel, stainless steel, copper, aluminum, nickel, carbon electrode, carbon, nickel, titanium, or the like may be adopted. The composite current collector may include a polymer material substate and a metal layer. The composite current collector may be formed by forming a metal material (aluminum, aluminum alloy, nickel, nickel alloy, titanium, titanium alloy, silver, silver alloy, or the like) on a polymer material substrate (such as a substrate of polypropylene, polyethylene terephthalate, polybutylene terephthalate, polystyrene, or polyethylene).

As an example, the positive electrode active material may include at least one of the following materials: lithium-containing phosphate, lithium transition metal oxide and their respective modified compounds. However, this application is not limited to these materials, and other traditional materials that can be used as positive electrode active materials of batteries may also be used.

In some embodiments, the negative electrode may be a negative electrode sheet, and the negative electrode sheet may include a negative electrode current collector.

As an example, the negative electrode current collector may adopt a metal foil or a composite current collector. For example, as the metal foil, silver-plated aluminum, silver-plated stainless steel, stainless steel, copper, aluminum, nickel, carbon electrode, carbon, nickel, titanium, or the like may be adopted.

In some embodiments, the negative electrode current collector has two opposite surfaces in its own thickness direction, and the negative electrode active material is provided on either or both of the two opposite surfaces of the negative electrode current collector.

As an example, the negative electrode active material may adopt a negative electrode active material known in the art for batteries. As an example, the negative electrode active material may include at least one of the following materials: artificial graphite, natural graphite, soft carbon, hard carbon, silicon-based material, tin-based material, lithium titanate, and the like. The silicon-based material may be selected from at least one of elemental silicon, silicon oxide compound, silicon-carbon composite, silicon-nitrogen composite, and silicon alloy. The tin-based material may be selected from at least one of elemental tin, tin oxide compound, and tin alloy. However, this application is not limited to these materials, and other conventional materials that can be used as negative electrode active materials of batteries may also be used. These negative electrode active materials may be used alone, or two or more may be used in combination.

In some embodiments, the separator is a separating film. This application does not particularly limit the type of the separating film, and any well-known porous structure separating film with good chemical stability and mechanical stability may be selected.

As an example, the main material of the separating film may be selected from at least one of glass fiber, non-woven fabric, polyethylene, polypropylene, polyvinylidene fluoride, or ceramic. The separating film may be a single-layer film or a multi-layer composite film, which is not particularly limited. When the separating film is a multi-layer composite film, the materials of each layer may be the same or different, which is not particularly limited. The separator may be a separate component located between the positive and negative electrodes, or may be attached to the surfaces of the positive and negative electrodes.

In some embodiments, the separator is a solid electrolyte. The solid electrolyte is provided between the positive electrode and the negative electrode, and at the same time plays the role of transmitting ions and isolating the positive and negative electrodes.

In some embodiments, the electrode assembly is a wound structure. The positive electrode sheet and the negative electrode sheet are wound into the wound structure.

In some embodiments, the electrode assembly is a laminated structure.

In some embodiments, the battery cell may include a housing. The housing is configured to encapsulate components such as the electrode assembly and electrolyte. The housing may be a steel shell, an aluminum shell, a composite metal shell (such as a copper-aluminum composite housing), or the like.

In some embodiments, the housing includes an end cover and a shell, the shell is provided with an opening, and the end cover seals the opening to form a sealed space for accommodating substances such as the electrode assembly and electrolyte. The shell may be provided with one or more openings. The end cover may also be provided with one or more.

In some embodiments, at least one electrode terminal is provided on the housing, and the electrode terminal is electrically connected to a tab of the electrode assembly. The electrode terminal may be directly connected to the tab, or may be indirectly connected to the tab through an adapter. The electrode terminal may be provided on the end cover, or may be provided on the shell.

In some embodiments, an explosion-proof valve is provided on the housing. The explosion-proof valve is configured to release the internal pressure of the battery cell.

As an example, the battery cell may be a cylindrical battery cell, a prismatic battery cell, a pouch battery cell or a battery cell of other shapes, where the prismatic battery cell includes a square-shell battery cell, a blade-shaped battery cell, a polygonal prismatic battery, and the polygonal prismatic battery is, for example, a hexagonal prismatic battery, and the embodiments of this application are not particularly limited.

The development of battery technology needs to consider multiple design factors at the same time, for example, performance parameters such as energy density, discharge capacity, or charge-discharge rate, and in addition, the reliability of the battery also needs to be considered.

The battery cell includes a housing, and the housing is provided with a liquid injection hole to inject electrolyte into the interior of the battery cell. After the liquid injection is completed, the liquid injection hole usually needs to be sealed to reduce the risk of electrolyte leakage. For example, a metal sealing member is welded to the housing to seal the liquid injection hole. However, as the sealing area between the metal sealing member and the housing is small, especially, for the case where the wall of the housing is relatively thin, when connected by means of butt welding, the metal sealing member or the housing is easily penetrated, which cannot meet the airtightness after the metal sealing member is welded to the housing.

In view of this, this application provides a technical solution, where the battery cell includes a housing and a first sealing member, the housing includes a first wall, the liquid injection hole is provided in the first wall, the first sealing member is welded to the first wall and forms a connection portion, the connection portion is disposed around the liquid injection hole, the connection portion is exposed on a surface of the first sealing member facing away from the first wall, and the first sealing member and the first wall may be welded and connected in a thickness direction of the first wall, the first sealing member and the first wall have a larger sealing area, so that the airtightness after the first sealing member is connected to the first wall is relatively high, and the reliability of the battery cell is relatively high.

In such a battery cell, the connection portion is a weld mark, and since the connection portion is exposed on the surface of the first sealing member facing away from the first wall, the first sealing member and the first wall may be connected and fixed by means of penetration welding, so that the first sealing member and the first wall have a larger sealing area, for example, providing a wider connection portion, or providing multiple connection portions around the liquid injection hole, so as to improve the airtightness after the first sealing member is connected to the first wall, and improve the reliability of the battery cell.

The battery disclosed in the embodiments of this application may be used in, but not limited to, electric devices such as vehicles, ships or aircrafts. A power supply system of the electric device may be composed of the battery disclosed in this application.

The embodiments of this application provide an electric device using a battery as a power source, where the electric device may be, but is not limited to, a mobile phone, a tablet computer, a notebook computer, an electric toy, an electric tool, an electric bicycle, an electric motorcycle, an electric vehicle, a ship, and a spacecraft. The electric toy may include a fixed or mobile electric toy, for example, a game console, an electric car toy, an electric ship toy, and an electric airplane toy, and the spacecraft may include an airplane, a rocket, a space shuttle, a spaceship, and the like.

The following embodiments are described by taking an electric device according to an embodiment of this application as a vehicle 1000 as an example for convenience of description.

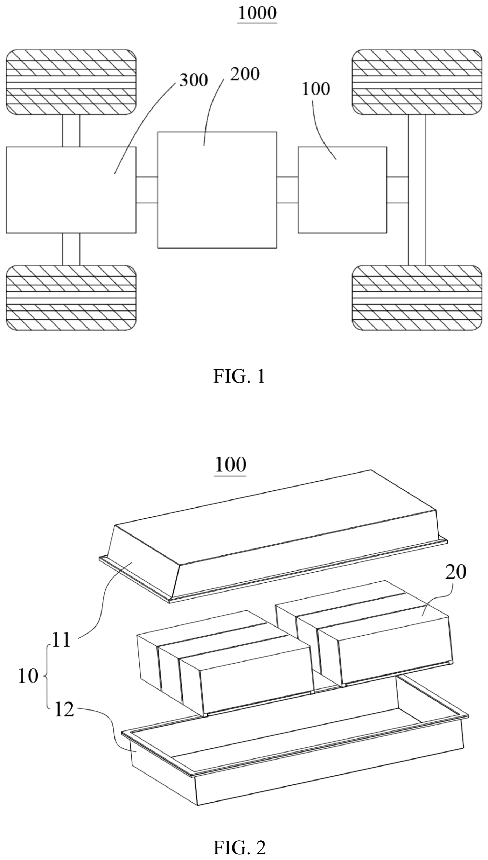

Referring to FIG. 1, FIG. 1 is a schematic structural diagram of a vehicle provided in some embodiments of this application. The vehicle 1000 may be a fuel vehicle, a gas vehicle or a new energy vehicle, and the new energy vehicle may be a pure electric vehicle, a hybrid vehicle, an extended-range vehicle, or the like. A battery 100 is provided inside the vehicle 1000, and the battery 100 may be provided at the bottom or the head or the tail of the vehicle 1000. The battery 100 may be used for power supply of the vehicle 1000. For example, the battery 100 may serve as an operating power source of the vehicle 1000 for a circuit system of the vehicle 1000, for example, for working power requirements during starting, navigation and operation of the vehicle 1000.

The vehicle 1000 may further include a controller 200 and a motor 300, where the controller 200 is configured to control the battery 100 to supply power to the motor 300, for example, for working power requirements during starting, navigation and driving of the vehicle 1000.

In some embodiments of this application, the battery 100 may not only serve as an operating power source of the vehicle 1000, but also serve as a driving power source of the vehicle 1000, replacing or partially replacing fuel or natural gas to provide driving power for the vehicle 1000.

Referring to FIG. 2, FIG. 2 is an exploded view of a battery provided in some embodiments of this application. The battery 100 includes a box 10 and a battery cell 20, where the battery cell 20 is accommodated in the box 10. The box 10 is configured to provide an accommodation space for the battery cell 20, and the box 10 may adopt various structures. In some embodiments, the box 10 may include a first sub-box 11 and a second sub-box 12, the first sub-box 11 and the second sub-box 12 cover each other, and the first sub-box 11 and the second sub-box 12 jointly define the accommodation space for accommodating the battery cell 20. The second sub-box 12 may be a hollow structure with one end open, the first sub-box 11 may be a plate-shaped structure, and the first sub-box 11 covers an opening side of the second sub-box 12, so that the first sub-box 11 and the second sub-box 12 jointly define the accommodation space. The first sub-box 11 and the second sub-box 12 may also be hollow structures with one side open, and an opening side of the first sub-box 11 covers an opening side of the second sub-box 12.

In the battery 100, there may be multiple battery cells 20, and the multiple battery cells 20 may be connected in series or in parallel or in hybrid, where hybrid means that the multiple battery cells 20 are connected both in series and in parallel. The multiple battery cells 20 may be directly connected in series or in parallel or in hybrid, and then the whole composed of the multiple battery cells 20 is accommodated in the box 10. Certainly, the battery 100 may also be that multiple battery cells 20 are first connected in series or in parallel or in hybrid to form a battery module, and multiple battery modules are then connected in series or in parallel or in hybrid to form a whole, and accommodated in the box 10. The battery 100 may further include other structures. For example, the battery 100 may further include a bus component for realizing electrical connection between the multiple battery cells 20.

The battery cell 20 may be a secondary battery or a primary battery; the battery cell 20 may also be a lithium-sulfur battery, a sodium-ion battery or a magnesium-ion battery, but is not limited thereto.

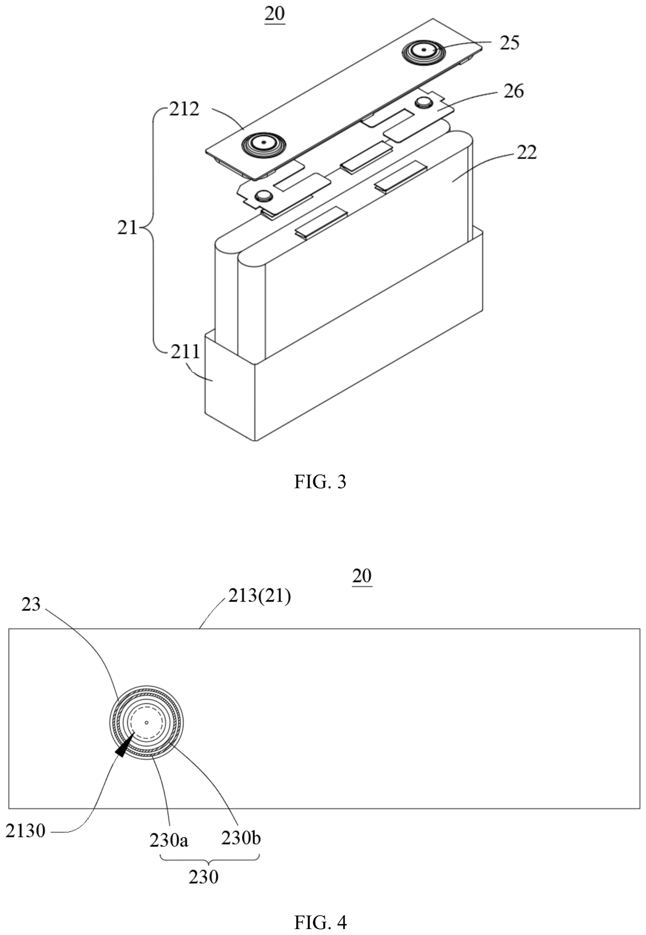

Referring to FIG. 3, FIG. 3 is an exploded view of a battery cell provided in some embodiments of this application. As shown in FIG. 3, the battery cell 20 includes a housing 21, an electrode assembly 22, and other functional components. The housing 21 includes a shell 211 and an end cover 212, the shell 211 has an opening, and the end cover 212 seals the opening to isolate an internal environment of the battery cell 20 from an external environment.

The shell 211 is a component configured to cooperate with the end cover 212 to form the internal environment of the battery cell 20, where the formed internal environment may be used for accommodating the electrode assembly 22, electrolyte, and other components. The shell 211 and the end cover 212 may be independent components. The shell 211 may be of various shapes and sizes. Specifically, the shape of the shell 211 may be determined according to the specific shape and size of the electrode assembly 22. The material of the shell 211 may be various, such as copper, iron, aluminum, stainless steel, or aluminum alloy.

The end cover 212 is a component that covers the opening of the shell 211 to isolate the internal environment of the battery cell 20 from the external environment. Without limitation, the shape of the end cover 212 may be adapted to the shape of the shell 211 to cooperate with the shell 211. Optionally, the end cover 212 may be made of a material with certain hardness and strength (such as aluminum alloy), so that the end cover 212 is not easy to deform when subjected to extrusion and collision, allowing for higher structural strength of the battery cell 20 and improved reliability. Functional components such as an electrode terminal 25 and a pressure relief mechanism may be provided on the end cover 212. The electrode terminal 25 may be electrically connected to the electrode assembly 22 for outputting or inputting electric energy of the battery cell 20. The material of the end cover 212 may also be various, such as copper, iron, aluminum, stainless steel, or aluminum alloy, and the embodiments of this application do not make special limitations thereto. In some embodiments, an insulation structure may also be provided on an inner side of the end cover 212, and the insulation structure may be configured to isolate an electrical connection portion 230 in the shell 211 from the end cover 212 to reduce the risk of short circuit. For example, the insulation structure may be plastic, rubber, or the like.

The electrode assembly 22 is a component in the battery cell 20 where an electrochemical reaction occurs. One or more electrode assemblies 22 may be contained in the shell 211. The electrode assembly 22 is mainly formed by winding or stacking a positive electrode sheet and a negative electrode sheet, and a separating film is usually provided between the positive electrode sheet and the negative electrode sheet, where the separating film is configured to separate the positive electrode sheet and the negative electrode sheet to avoid internal short circuit between the positive electrode sheet and the negative electrode sheet. Parts of the positive electrode sheet and the negative electrode sheet with active substances constitute a main body portion of the electrode assembly, and parts of the positive electrode sheet and the negative electrode sheet without active substances each constitute a tab. A positive electrode tab and a negative electrode tab may be located together at one end of the main body portion or respectively located at two ends of the main body portion. During charging and discharging of the battery, a positive electrode active substance and a negative electrode active substance react with the electrolyte, and the tab is connected to the electrode terminal 25 through an adapter 26 to form a current loop.

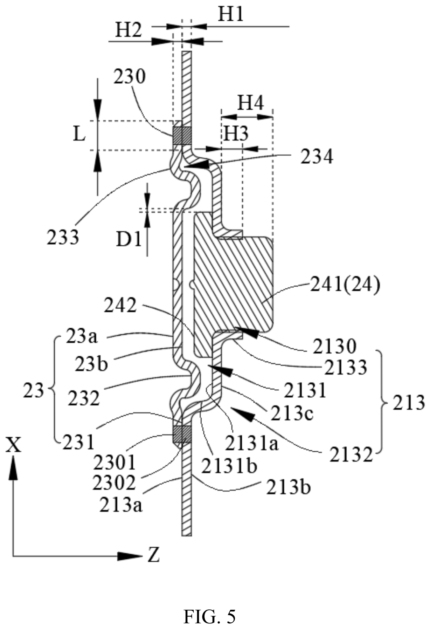

Referring to FIG. 3, and further referring to FIG. 4 and FIG. 5, FIG. 4 is a schematic assembly diagram of a first sealing member and a first wall provided in some embodiments of this application, and FIG. 5 is a cross-sectional view of the first sealing member and the first wall in an assembled state provided in some embodiments of this application. According to some embodiments of this application, this application provides a battery cell 20, where the battery cell 20 includes a housing 21 and a first sealing member 23. The housing 21 includes a first wall 213, where the first wall 213 is provided with a liquid injection hole 2130; and the first sealing member 23 is configured to seal the liquid injection hole 2130, the first sealing member 23 is welded to the first wall 213 to form a connection portion 230, the connection portion 230 is disposed around the liquid injection hole 2130, and the connection portion 230 is exposed on a surface of the first sealing member 23 facing away from the first wall 213.

The first wall 213 may be the end cover 212, or may be one wall of the shell 211. For example, the first wall 213 and other walls enclose the shell 211.

The first sealing member 23 is a metal member, and the material of the first sealing member 23 may be aluminum, aluminum alloy, or the like.

The first sealing member 23 is configured to be welded to the first wall 213, and the first sealing member 23 seals the liquid injection hole 2130 to cover the liquid injection hole 2130 and reduce the risk of electrolyte leakage inside the battery cell 20.

The connection portion 230 is formed by welding the first sealing member 23 to the first wall 213, and the connection portion 230 may be called a weld mark. The connection portion 230 is exposed on the surface of the first sealing member 23 facing away from the first wall 213, which means that the connection portion 230 is exposed on the surface of the first sealing member 23 facing away from the first wall 213, and the first sealing member 23 and the first wall 213 may be welded and connected along a thickness direction Z of the first wall 213 from a side of the first sealing member 23 facing away from the first wall 213.

The first wall 213 and the first sealing member 23 may be relatively thin, so that the first sealing member 23 and the first wall 213 can be connected by means of penetration welding, and the first sealing member 23 and the first wall 213 have a larger connection area.

The connection portion 230 is disposed around the liquid injection hole 2130 to realize the sealed connection between the first sealing member 23 and the first wall 213, so as to seal the liquid injection hole 2130.

According to the battery cell 20 of the embodiment of this application, penetration welding may be performed on the first sealing member 23 and the first wall 213 along the thickness direction Z of the first wall 213 on the side of the first sealing member 23 facing away from the first wall 213, so that the connection portion 230 is exposed on the surface of the first sealing member 23 facing away from the first wall 213. This can make the first sealing member 23 and the first wall 213 have a larger sealing area, for example, providing a wider connection portion 230, or providing multiple connection portions 230 around the liquid injection hole 2130, so as to improve the airtightness after the first sealing member 23 is connected to the first wall 213, and improve the reliability of the battery cell 20.

According to some embodiments of this application, the connection portion 230 includes a first part 2301 and a second part 2302 sequentially distributed along the thickness direction Z of the first wall 213, where the first part 2301 is located at the first sealing member 23, and the second part 2302 is located at the first wall 213.

In the above solution, the first part 2301 is located at the first sealing member 23, and the second part 2302 is located at the first wall 213, so that the first sealing member 23 is firmly connected to the first wall 213.

According to some embodiments of this application, along the thickness direction Z of the first wall 213, there is a gap between an orthographic projection of the connection portion 230 and an edge of the first sealing member 23.

In the above solution, there is a gap between the orthographic projection of the connection portion 230 and the edge of the first sealing member 23, and the first sealing member 23 may be connected to the first wall 213 by means of penetration welding to form the connection portion 230, so that the first sealing member 23 is firmly connected to the first wall 213, and the reliability of the battery cell 20 is improved.

Referring to FIG. 5, according to some embodiments of this application, the thickness of the first wall 213 is H1, and the wall thickness of the first sealing member 23 is H2, satisfying H2 ≤ H1.

The first wall 213 includes a first surface 213a facing away from the interior of the battery cell 20 and a second surface 213b facing the interior of the battery cell 20, and the wall thickness of the first wall 213 may be a distance between the first surface 213a and the second surface 213b. The thickness direction Z of the first wall 213 may be parallel to the thickness direction of the first sealing member 23.

In the above solution, the thickness H1 of the first wall 213 is greater than or equal to the wall thickness H2 of the first sealing member 23, so that when the first sealing member 23 is welded to the first wall 213, the first wall 213 near the liquid injection hole 2130 is not easily penetrated, and the reliability of the battery cell 20 is improved.

Referring to FIG. 4 and FIG. 5, according to some embodiments of this application, the connection portion 230 includes a first connection portion 230a and a second connection portion 230b, where the first connection portion 230a is disposed around the liquid injection hole 2130, and the second connection portion 230b is disposed around the first connection portion 230a.

The first connection portion 230a and the second connection portion 230b are two connection portions 230 disposed around the liquid injection hole 2130, and the first connection portion 230a cooperates with the second connection portion 230b to form two blocking structures to reduce the risk of electrolyte leaking from a space between the first sealing member 23 and the first wall 213.

The first connection portion 230a and the second connection portion 230b may both be annular structures, and a width of the first connection portion 230a and a width of the second connection portion 230b may be the same or different.

In the above solution, the first connection portion 230a is disposed around the liquid injection hole 2130, and the second connection portion 230b is disposed around the first connection portion 230a, which can enhance the connection stability between the first sealing member 23 and the first wall 213, and improve the airtightness after the first sealing member 23 is connected to the first wall 213.

According to some embodiments of this application, the number of the connection portions 230 may be multiple, for example, three or more. The multiple connection portions 230 are all disposed around the liquid injection hole 2130, and the multiple connection portions 230 may be multiple concentric annular structures.

Referring to FIG. 5, according to some embodiments of this application, the first sealing member 23 has a fitting surface 231 for fitting to the first wall 213, a width of the fitting surface 231 in a first direction X is L, the first direction X intersects with the thickness direction Z of the first wall 213, and the thickness of the first wall 213 is H1, satisfying 3*H1 ≤ L ≤ 6*H1.

In the figure, the direction indicated by the letter X may be the first direction. The first direction X may be a length direction of the first wall 213, or may be a width direction of the first wall 213. Optionally, the first direction X may be perpendicular to the thickness direction Z of the first wall 213.

The fitting surface 231 is a surface of the first sealing member 23 for fitting to the first wall 213, and the fitting surface 231 is disposed around the liquid injection hole 2130. The fitting surface 231 is an annular structure, and the width of the fitting surface 231 refers to a width of a cross-section of the fitting surface 231 cut by a plane perpendicular to its extension direction. For example, in FIG. 5, the size referred to by the letter L is the width of the fitting surface 231.

The size of the fitting surface 231 in the first direction X affects the connection area between the first sealing member 23 and the first wall 213. The larger the size of the fitting surface 231 in the first direction X, the larger the connection area between the first sealing member 23 and the first wall 213 may be.

Optionally, L may be, but is not limited to, 3*H1, 3.5*H1, 4*H1, 4.5*H1, 5*H1, 5.5*H1, and 6*H1.

In the above solution, the width of the fitting surface 231 in the first direction X satisfies the above relationship, allowing the first sealing member 23 and the first wall 213 to have a larger connection area, such that multiple connection portions 230 can be provided around the liquid injection hole 2130, and thus the first sealing member 23 is firmly connected to the first wall 213, and allowing the first sealing member 23 to occupy a relatively small size in the first direction X, thus reducing materials.

Referring to FIG. 5, according to some embodiments of this application, the first wall 213 includes a first surface 213a facing away from the interior of the battery cell 20 and a second surface 213b facing the interior of the battery cell 20, the first surface 213a is provided with a groove 2131, the second surface 213b forms a protrusion 2132 at a position corresponding to the groove 2131, the liquid injection hole 2130 is provided at a groove bottom wall 2131a of the groove 2131, and the first sealing member 23 covers the groove 2131.

The second surface 213b and the first surface 213a may be two opposite surfaces in the thickness direction Z of the first wall 213. The second surface 213b is provided facing away from the first sealing member 23.

The groove 2131 is formed by recessing the first surface 213a toward the interior of the battery cell 20, a depth direction of the groove 2131 may be parallel to the thickness direction Z of the first wall 213, and the liquid injection hole 2130 penetrates through the groove bottom wall 2131a of the groove 2131, that is, the liquid injection hole 2130 penetrates through the protrusion 2132.

The first sealing member 23 covers the groove 2131 and is connected to the first surface 213a, so that the first sealing member 23 seals the liquid injection hole 2130.

In the above solution, the first surface 213a and the second surface 213b may be two opposite surfaces in the thickness direction Z of the first wall 213, the first surface 213a is formed with the groove 2131, the second surface 213b forms the protrusion 2132 at the position corresponding to the groove 2131, the first wall 213 may be relatively thin, the groove 2131 may be formed by stamping, and the processing and manufacturing difficulty is relatively low. The liquid injection hole 2130 is provided at the groove bottom wall 2131a of the groove 2131, and the first sealing member 23 covers the groove 2131, so as to reduce the space occupation after the first sealing member 23 and the first wall 213 are assembled.

Referring to FIG. 5, according to some embodiments of this application, the battery cell 20 further includes a second sealing member 24, and at least part of the second sealing member 24 is provided in the liquid injection hole 2130 to seal the liquid injection hole 2130.

The second sealing member 24 is provided in the liquid injection hole 2130, and the second sealing member 24 is connected to a hole wall of the liquid injection hole 2130 to seal the liquid injection hole 2130.

In the above solution, at least part of the second sealing member 24 is provided in the liquid injection hole 2130, so as to facilitate the sealing of the liquid injection hole 2130 and reduce the risk of electrolyte leakage.

Referring to FIG. 5, according to some embodiments of this application, the first wall 213 includes a flanging portion 2133, the flanging portion 2133 is provided on a side of the protrusion 2132 facing the interior of the battery cell 20, the protrusion 2132 has a third surface 213c facing away from the second surface 213b, the liquid injection hole 2130 penetrates through the flanging portion 2133, and part of an outer periphery of the second sealing member 24 fits to an inner surface of the flanging portion 2133.

The first wall 213 may be an integrally formed structure. For example, when the first wall 213 is stamped to form the liquid injection hole 2130, part of the first wall 213 is folded toward the interior of the battery cell 20 to form the flanging portion 2133.

The first sealing member 23 is located on a side of the first wall 213 facing away from the interior of the battery cell 20, so as to reduce the risk of interference between the first sealing member 23 and the flanging portion 2133.

An inner surface of the flanging portion 2133 encloses part of the liquid injection hole 2130, and the flanging portion 2133 is annular and can guide the electrolyte when the electrolyte is injected into the interior of the battery cell 20.

In the above solution, the liquid injection hole 2130 penetrates through the flanging portion 2133, and the liquid injection hole 2130 may be formed by stamping the first wall 213. The flanging portion 2133 is provided on the side of the protrusion 2132 facing the interior of the battery cell 20, allowing for reasonable use of the internal space of the battery cell 20. The flanging portion 2133 may be in an annular structure, and the part of the outer periphery of the second sealing member 24 fits to the inner surface of the flanging portion 2133, so that the second sealing member 24 has a larger sealing area with the first wall 213 while sealing the liquid injection hole 2130. This can improve the connection sealing between the second sealing member 24 and the first wall 213, and reduce the risk of electrolyte leakage.

Referring to FIG. 5, according to some embodiments of this application, along the thickness direction Z of the first wall 213, a size of the flanging portion 2133 protruding from the third surface 213c is H3, and a wall thickness of the first wall 213 is H1, satisfying H1 ≤ H3 ≤ 3*H1.

The third surface 213c is provided facing the interior of the battery cell 20, and the flanging portion 2133 protrudes from the third surface 213c along the thickness direction Z of the first wall 213. H3 may be a size of the flanging portion 2133 protruding from the third surface 213c along the thickness direction Z of the first wall 213.

Optionally, H3 may be, but is not limited to, H1, 1.5*H1, 2*H1, 2.5*H1, and 3*H1.

In the above solution, the size of the flanging portion 2133 protruding from the third surface 213c satisfies the above relationship, allowing for a larger connection area between the second sealing member 24 and the flanging portion 2133, and relatively low processing and manufacturing difficulty.

Referring to FIG. 5, according to some embodiments of this application, along the thickness direction Z of the first wall 213, a size of the second sealing member 24 protruding from the third surface 213c is H4, satisfying H3 ≤ H4.

Part of the second sealing member 24 protrudes from the third surface 213c along the thickness direction Z of the first wall 213, and H4 may be a size in the thickness direction Z of the first wall 213 of the part of the second sealing member 24 protruding from the third surface 213c.

In the above solution, the size of the second sealing member 24 protruding from the third surface 213c satisfies the above relationship, allowing the second sealing member 24 and the flanging portion 2133 to have a larger connection area, and allowing the second sealing member 24 to occupy a relatively small assembly space, thus reducing the risk of interference between the second sealing member 24 and other components.

Referring to FIG. 5, according to some embodiments of this application, the second sealing member 24 includes a body 241 and a flange 242, the body 241 seals the liquid injection hole 2130, and the flange 242 is formed on an outer peripheral surface of the body 241 and connected to the groove bottom wall 2131a of the groove 2131.

The body 241 may be columnar, a contour of the body 241 matches a contour of the liquid injection hole 2130, and part of the body 241 located in the liquid injection hole 2130 fits to the hole wall of the liquid injection hole 2130.

The flange 242 may be integrally formed with the body 241, so that the flange 242 is firmly connected to the body 241.

The flange 242 is formed on the outer peripheral surface of the body 241 and disposed around a circumferential direction of the body 241, so that the flange 242 and the groove bottom wall 2131a of the groove 2131 have a larger connection area.

In the above solution, the flange 242 is formed on the outer peripheral surface of the body 241, and the flange 242 can limit the body 241 from moving toward the interior of the battery cell 20. Additionally, the flange 242 is connected to the groove bottom wall 2131a of the groove 2131, which can improve the sealing effect between the second sealing member 24 and the first wall 213, and reduce the risk of electrolyte leakage.

Referring to FIG. 5, according to some embodiments of this application, the first sealing member 23 is provided with a recessed portion 232, the recessed portion 232 is recessed toward the groove 2131, and along the thickness direction Z of the first wall 213, an orthographic projection of the recessed portion 232 falls within an orthographic projection of a groove side wall 2131b of the groove 2131.

The first sealing member 23 is located on the side of the first wall 213 facing away from the interior of the battery cell 20, which helps the first sealing member 23 to cover the groove 2131. Referring to FIG. 5, the first sealing member 23 includes a fourth surface 23a and a fifth surface 23b, the fourth surface 23a and the fifth surface 23b are oppositely provided in the thickness direction Z of the first wall 213, the fourth surface 23a is a surface of the first sealing member 23 facing away from the interior of the battery cell 20, and the fifth surface 23b is a surface of the first sealing member 23 facing the interior of the battery cell 20. The recessed portion 232 is formed by recessing the fourth surface 23a toward the interior of the battery cell 20, and the recessed portion 232 forms a protruding structure at a corresponding position of the fifth surface 23b.

The recessed portion 232 may be a reinforced region of the first sealing member 23, the recessed portion 232 is recessed toward the groove 2131, and along the thickness direction Z of the first wall 213, the orthographic projection of the recessed portion 232 falls within the orthographic projection of the groove side wall 2131b of the groove 2131, so that a part of a limiting portion is located in the groove 2131.

In the above solution, the provision of the recessed portion 232 can improve the strength of the first sealing member 23, and at the same time, the recessed portion 232 is recessed toward the interior of the battery cell 20 and located in the groove 2131, which can reduce space occupation and reduce the risk of interference between the first sealing member 23 and other components.

According to some embodiments of this application, the first sealing member 23 is provided with a second protrusion 233 on the fourth surface 23a, the second protrusion 233 forms a second recessed portion 234 at a corresponding position of the fifth surface 23b, and the second protrusion 233 is disposed around the recessed portion 232. The provision of the second protrusion 233 facilitates stamping formation of the first sealing member 23 and facilitates stress release.

In some embodiments, along the thickness direction Z of the first wall 213, a projection of the second recessed portion 234 falls into the groove 2131, so as to facilitate the assembly of the first sealing member 23 and the first wall 213.

Referring to FIG. 5, according to some embodiments of this application, along the thickness direction Z of the first wall 213, the orthographic projection of the recessed portion 232 is disposed around the second sealing member 24.

The orthographic projection of the recessed portion 232 may be the orthographic projection of the recessed portion 232 along the thickness direction Z of the first wall 213 on the groove bottom wall 2131a of the groove 2131. Observed along the thickness direction Z of the first wall 213, the orthographic projection of the recessed portion 232 is located outside the second sealing member 24, and the orthographic projection of the recessed portion 232 is disposed around the second sealing member 24. There may be a gap between the orthographic projection of the recessed portion 232 and the second sealing member 24, or the orthographic projection of the recessed portion 232 may be in contact with an outer peripheral surface of the second sealing member 24, and during assembly of the battery cell 20, the recessed portion 232 does not interfere with the second sealing member 24.

In the above solution, part of the recessed portion 232 is provided in the groove 2131, and the orthographic projection of the recessed portion 232 is disposed around the second sealing member 24, which can reduce the risk of interference between the recessed portion 232 and the second sealing member 24.

Referring to FIG. 5, according to some embodiments of this application, along the first direction X, a minimum distance between the orthographic projection of the recessed portion 232 along the thickness direction Z of the first wall 213 and an orthographic projection of the flange 242 along the thickness direction Z of the first wall 213 is D1, satisfying 0.05 mm ≤ D1 ≤ 0.2 mm, and the first direction X intersects with the thickness direction Z of the first wall 213.

The orthographic projection of the recessed portion 232 along the thickness direction Z of the first wall 213 may be the orthographic projection of the recessed portion 232 along the thickness direction Z of the first wall 213 on the groove bottom wall 2131a of the groove 2131.

The orthographic projection of the flange 242 along the thickness direction Z of the first wall 213 may be the orthographic projection of the flange 242 along the thickness direction Z of the first wall 213 on the groove bottom wall 2131a of the groove 2131.

The groove bottom wall 2131a of the groove 2131 is perpendicular to the thickness direction Z of the first wall 213, and on the groove bottom wall 2131a of the groove 2131, D1 may be a minimum distance between the orthographic projection of the recessed portion 232 on the groove bottom wall 2131a of the groove 2131 and the orthographic projection of the flange 242 on the groove bottom wall 2131a of the groove 2131.

Optionally, D1 may be, but is not limited to, 0.05 mm, 0.06 mm, 0.07 mm, 0.08 mm, 0.09 mm, 0.1 mm, 0.11 mm, 0.12 mm, 0.13 mm, 0.14 mm, 0.15 mm, 0.16 mm, 0.17 mm, 0.18 mm, 0.19 mm, and 0.2 mm.

In the above solution, the minimum distance in the first direction X between the orthographic projection of the recessed portion 232 along the thickness direction Z of the first wall 213 and the orthographic projection of the flange 242 along the thickness direction Z of the first wall 213 satisfies the above relationship, reducing the risk of interference between the recessed portion 232 and the flange 242, and reducing the space occupation of the recessed portion 232 in the first direction X.

According to some embodiments of this application, along the thickness direction Z of the first wall 213, the second sealing member 24 and the first sealing member 23 are spaced apart.

In the above solution, the second sealing member 24 and the first sealing member 23 are spaced apart, so that the second sealing member 24 does not interfere with the first sealing member 23, facilitating the assembly of the first sealing member 23 and the first wall 213.

According to some embodiments of this application, the second sealing member 24 is a rubber member.

In the above solution, the rubber member can undergo elastic deformation, and the second sealing member 24 may be in interference fit with the liquid injection hole 2130, so as to increase the sealing effect between the second sealing member 24 and the hole wall of the liquid injection hole 2130.

In some embodiments, the second sealing member 24 may be a T-shaped fluororubber nail.

According to some embodiments of this application, a surface of the second sealing member 24 facing away from the interior of the battery cell 20 does not exceed the first surface 213a of the first wall 213, so as to save assembly space.

According to some embodiments of this application, the thickness of the first wall 213 is H1, satisfying H1 ≤ 0.6 mm.

Since the first wall 213 is relatively thin, so as to facilitate the connection of the first sealing member 23 and the first wall 213 by means of penetration welding, the first sealing member 23 and the first wall 213 may have a larger connection area, improving the airtightness after the first sealing member 23 is connected to the first wall 213. The first wall 213 is relatively thin, so that the weight of the battery cell 20 can be relatively light to meet the usage requirement of light weight.

According to some embodiments of this application, an embodiment of this application further provides a battery 100, where the battery 100 includes the battery cell 20 provided in any one of the above embodiments.

According to some embodiments of this application, an embodiment of this application further provides an electric device, where the electric device includes the battery cell 20 or the battery 100 provided in any one of the above embodiments, and the battery cell 20 or the battery 100 is configured to provide electric energy.

According to some embodiments of this application, referring to FIG. 3 to FIG. 5, an embodiment of this application provides a battery cell 20, where the battery cell 20 includes a housing 21, an electrode terminal 25, an electrode assembly 22, a first sealing member 23, and a second sealing member 24. The housing 21 includes a shell 211 and an end cover 212, and the end cover 212 seals an opening of the shell 211. The electrode terminal 25 is provided on the end cover 212. The electrode assembly 22 and electrolyte are accommodated in the housing 21. The housing 21 includes a first wall 213, where the first wall 213 is provided with a liquid injection hole 2130. The first wall 213 includes a first surface 213a facing away from an interior of the battery cell 20 and a second surface 213b facing the interior of the battery cell 20, the first surface 213a is provided with a groove 2131, the second surface 213b forms a protrusion 2132 at a position corresponding to the groove 2131, and the liquid injection hole 2130 is provided at a groove bottom wall 2131a of the groove 2131 and penetrates through the groove bottom wall 2131a. The first wall 213 includes a flanging portion 2133, the flanging portion 2133 is located on a side of the protrusion 2132 facing the interior of the battery cell 20, and the liquid injection hole 2130 penetrates through the flanging portion 2133. The second sealing member 24 includes a body 241 and a flange 242, a contour of the body 241 matches a contour of the liquid injection hole 2130, an outer peripheral surface of the body 241 fits to a hole wall of the liquid injection hole 2130, and the flange 242 is formed on the outer peripheral surface of the body 241 and disposed around a circumferential direction of the body 241. The flange 242 is connected to the groove bottom wall 2131a of the groove 2131, and part of the body 241 is located in the liquid injection hole 2130. A thickness of the first wall 213 is H1, satisfying H1 ≤ 0.6 mm. Along a thickness direction Z of the first wall 213, a size of the flanging portion 2133 protruding from a third surface 213c is H3, satisfying H1 ≤ H3 ≤ 3*H1.

According to the battery cell 20 of the embodiments of this application, the first wall 213 is relatively thin, and penetration welding can be performed on the first sealing member 23 and the first wall 213 along the thickness direction Z of the first wall 213 on a side of the first sealing member 23 facing away from the first wall 213, so that a connection portion 230 is exposed on a surface of the first sealing member 23 facing away from the first wall 213. This can make the first sealing member 23 and the first wall 213 have a larger sealing area. The second sealing member 24 is provided in the liquid injection hole 2130, and the second sealing member 24 fits to an inner surface of the flanging portion 2133, so that the second sealing member 24 and the first wall 213 have a larger connection area, and the second sealing member 24 can seal the liquid injection hole 2130. The cooperative use of the first sealing member 23 and the second sealing member 24 can reduce the risk of electrolyte leakage and improve the reliability of the battery cell 20.

Although this application has been described with reference to preferred embodiments, various improvements can be made thereto and components therein can be replaced with equivalents without departing from the scope of this application. In particular, as long as there is no structural conflict, the technical features mentioned in the various embodiments can be combined in any way. This application is not limited to the specific embodiments disclosed herein, but includes all technical solutions falling within the scope of the claims.

## Claims

1. A battery cell, comprising:
a housing, comprising a first wall, wherein the first wall is provided with a liquid injection hole; and
a first sealing member, configured to seal the liquid injection hole, wherein the first sealing member is welded to the first wall and forms a connection portion, the connection portion is disposed around the liquid injection hole, and the connection portion is exposed on a surface of the first sealing member facing away from the first wall.

2. The battery cell according to claim 1, wherein the connection portion comprises a first part and a second part sequentially distributed along a thickness direction of the first wall, the first part is located at the first sealing member, and the second part is located at the first wall.

3. The battery cell according to claim 1 or 2, wherein along the thickness direction of the first wall, there is a gap between an orthographic projection of the connection portion and an edge of the first sealing member.

4. The battery cell according to any one of claims 1 to 3, wherein a thickness of the first wall is H1, and a wall thickness of the first sealing member is H2, satisfying H2 ≤ H1.

5. The battery cell according to any one of claims 1 to 4, wherein the connection portion comprises a first connection portion and a second connection portion, the first connection portion is disposed around the liquid injection hole, and the second connection portion is disposed around the first connection portion.

6. The battery cell according to claim 5, wherein the first sealing member has a fitting surface for fitting to the first wall, a width of the fitting surface in a first direction is L, the first direction intersecting with the thickness direction of the first wall, and the thickness of the first wall is H1, satisfying 3*H1 ≤ L ≤ 6*H1.

7. The battery cell according to any one of claims 1 to 6, wherein the first wall comprises a first surface facing away from an interior of the battery cell and a second surface facing the interior of the battery cell, the first surface is provided with a groove, the second surface forms a protrusion at a position corresponding to the groove, the liquid injection hole is provided in a groove bottom wall of the groove, and the first sealing member covers the groove.

8. The battery cell according to claim 7, wherein the battery cell further comprises a second sealing member, and at least part of the second sealing member is provided in the liquid injection hole to seal the liquid injection hole.

9. The battery cell according to claim 8, wherein the first wall comprises a flanging portion, the flanging portion is provided on a side of the protrusion facing the battery cell, the protrusion has a third surface facing away from the second surface, the flanging portion protrudes from the third surface, the liquid injection hole penetrates through the flanging portion, and part of an outer periphery of the second sealing member fits to an inner surface of the flanging portion.

10. The battery cell according to claim 9, wherein along the thickness direction of the first wall, a size of the flanging portion protruding from the third surface is H3, and a wall thickness of the first wall is H1, satisfying H1 ≤ H3 ≤ 3*H1.

11. The battery cell according to claim 10, wherein along the thickness direction of the first wall, a size of the second sealing member protruding from the third surface is H4, satisfying H3 ≤ H4.

12. The battery cell according to any one of claims 9 to 11, wherein the second sealing member comprises a body and a flange, the body seals the liquid injection hole, and the flange is formed on an outer peripheral surface of the body and connected to the groove bottom wall of the groove.

13. The battery cell according to claim 12, wherein the first sealing member is provided with a recessed portion, the recessed portion is recessed toward the groove, and along the thickness direction of the first wall, an orthographic projection of the recessed portion falls within an orthographic projection of a groove side wall of the groove.

14. The battery cell according to claim 13, wherein along the thickness direction of the first wall, the orthographic projection of the recessed portion is disposed around the second sealing member.

15. The battery cell according to claim 14, wherein along a first direction, a minimum distance between the orthographic projection of the recessed portion along the thickness direction of the first wall and an orthographic projection of the flange along the thickness direction of the first wall is D1, satisfying 0.05 mm ≤ D1 ≤ 0.2 mm, and the first direction intersects with the thickness direction of the first wall.

16. The battery cell according to any one of claims 8 to 15, wherein along the thickness direction of the first wall, the second sealing member and the first sealing member are spaced apart.

17. The battery cell according to any one of claims 8 to 16, wherein the second sealing member is a rubber member.

18. The battery cell according to any one of claims 1 to 17, wherein the thickness of the first wall is H1, satisfying H1 ≤ 0.6 mm.

19. A battery, comprising the battery cell according to any one of claims 1 to 18.

20. An electric device, comprising the battery cell according to any one of claims 1 to 18 or the battery according to claim 19, wherein the battery cell or the battery is configured to provide electric energy.
